Europäisches Patentamt

European Patent Office

Office européen des brevets

(19)

(11) Veröffentlichungsnummer : **0 368 805 B1**

## (12) EUROPÄISCHE PATENTSCHRIFT

(45) Veröffentlichungstag der Patentschrift :
**27.05.92 Patentblatt 92/22**

(51) Int. Cl.⁵ : **A23C 15/16**

(21) Anmeldenummer : **89810822.0**

(22) Anmeldetag : **01.11.89**

(54) **Verfahren zur Herstellung von streichfähiger Butter mit reduziertem Fettgehalt.**

(30) Priorität : **07.11.88 CH 4129/88**

(43) Veröffentlichungstag der Anmeldung :
**16.05.90 Patentblatt 90/20**

(45) Bekanntmachung des Hinweises auf die
Patenterteilung :
**27.05.92 Patentblatt 92/22**

(84) Benannte Vertragsstaaten :
**AT BE CH DE FR GB IT LI LU NL SE**

(56) Entgegenhaltungen :
**EP-A- 0 098 664**
**WO-A-83/01728**
**DE-A- 2 652 558**
**FR-A- 2 261 713**
**FR-A- 2 319 300**
**FOOD SCIENCE & TECHNOLOGY AB-**
**STRACTS 74-04-P0553 (74018876); Ano.:**
**"DDMM butter processing line", & DDMM IN-**
**FORMATION,order no. 2, 2-3, 1973**

(73) Patentinhaber : **Verband**
**nordostschweizerischer Käserei- und**
**Milchgenossenschaften**
**Archstrasse 2**
**CH-8401 Winterthur (CH)**

(72) Erfinder : **Studer, Fritz**
**Sonnenhalde 1**
**CH-8603 Schwerzenbach (CH)**
Erfinder : **Von Rotz, Werner**
**Tüffenwies 21**
**CH-8064 Zürich (CH)**

(74) Vertreter : **Breiter, Heinz**
**Patentanwalt H. Breiter AG**
**Schaffhauserstrasse 27 Postfach 1163**
**CH-8401 Winterthur (CH)**

## Beschreibung

Die Erfindung bezieht sich auf ein Verfahren zur Herstellung von streichfähiger Butter mit reduziertem Fettgehalt aus Vorzugs- oder Tafelbutter, einer ersten wässrigen Phase mit einer leicht sauren Puffersubstanz und einer zweiten wässrigen Phase mit Milcheiweissen.

Als Vorzugsbutter, auch Spezialtafelbutter genannt, wird eine Butter bezeichnet, wenn sie aus pasteurisiertem Milchzentrifugenrahm, in der Regel unter Zusatz von Milchsäurebakterienkulturen und nach entsprechender Reifung, auf sorgfältigste Art hergestellt wurde und sich durch vorzügliche Qualität und lange Haltbarkeit auszeichnet. Betriebe, welche Vorzugsbutter herstellen oder ausformen und in den Verkehr bringen, werden regelmässigen bakteriologisch-chemischen Untersuchungen von amtlichen Laboratorien unterworfen. Ein Vorzugsbutterbetrieb muss die gesetzlichen Grenzwerte für den Fettgehalt, den Säuregrad und den Kochsalzgehalt dauernd einhalten. Weiter müssen die Normen für Haltbarkeit und die biologische und Sinnenprüfung erfullt sein.

Tafelbutter ist aus pasteurisiertem Milchzentrifugen-, Gebsen- oder Sirtenrahm hergestellte, auch in bezug auf Geruch und Geschmack einwandfreie Butter.

Sowohl Vorzugs- als auch Tafelbutter sind, als Brotaufstrich oder in der Küche verwendet, ein wertvoller Zusatz zu den Grundnahrungsmitteln. Beide enthalten im wesentlichen über 80 Gew.-% Butterfett, üblicherweise 83 Gew.-%. Butterfett enthält zahlreiche gesättigte und ungesättigte Fettsäuren. Physikalisch ist Butter eine Wasser-in-Oel Emulsion.

Obwohl Butter wegen ihrer Bekömmlichkeit, ihrem Geschmack und ihrer Lieferung essentieller Fettsäuren als Lebensmittel eine bedeutende Rolle spielt, wird oft der hohe Kaloriengehalt gefürchtet. Es liegt deshalb im Trend der Zeit, Butter mit weniger Kalorien herzustellen und anzubieten. Dabei sind jedoch neben herstellungstechnischen auch geschmackliche und nicht zuletzt gesetzgeberische Hindernisse zu überwinden, weil an Butter und daraus abgeleitete Produkte besonders hohe Anforderungen gestellt werden.

Die EP-A1 0062938 beschreibt eine auf Butterfett basierende Wasser-in-Oel Emulsion mit niedrigem Kaloriengehalt, bei welcher die Fettphase einen Anteil von 30 - 80%, bezogen auf die gesamte Zusammensetzung, hat und aus einer ungesättigten festen Butterfraktion besteht. Die wässrige Phase der Emulsion hat einen pH von 4,0 - 7,0 und einen Anteil von 20 - 70% an der gesamten Zusammensetzung. Nach einer besonderen Ausführungsform wird die niedrig schmelzende Fraktion, welche bei einer Temperatur von 20 - 30°C aus Butterfett gewonnen wird, verwendet.

In der EP-A1 0098663 wird ein Verfahren zur Herstellung eines Brotaufstrichs beschrieben, bei welchem vorerst Rahm, eine Oel-in-Wasser Emulsion, hergestellt wird. Dieser enthält 35 - 70% einer wässrigen Phase und 25 - 65 Gew.-% Fett mit einem bestimmten Festkörperprofil. Dann wird der Rahm unter Vermeidung einer Luft/Wasser-Grenzschicht bei einer Temperatur gebuttert, die das Fett wenigstens teilweise in kristallisierter Form vorliegen lässt. Durch diese Erhöhung der Viskosität wird erreicht, dass eine wenigstens teilweise Phasenumkehr erfolgt, wodurch ein Brotaufstrich hergestellt wird, welcher im wesentlichen denselben Fettgehalt wie der als Edukt verwendete Rahm hat. Dieser Brotaufstrich enthält ein Netzwerk von zusammenhängendem Fett und sowohl eingeschlossene als auch freie wässrige Phase. Weiter wird ein Brotaufstrich der entsprechenden Zusammensetzung beansprucht. Neben andern Komponenten nichttierischer Herkunft für die Herstellung der Rahmemulsion werden Magermilch und Butterfett als Ausgangsstoffe genannt.

Auch nach der EP-A1 0098664 wird für die Herstellung eines Brotaufstrichs aus einer Wasser-in-Oel Emulsion mit einem Fettgehalt von höchstens 60% vorerst eine Oel-in-Wasser Emulsion aus einer fetthaltigen Phase und einer wässrigen Losung hergestellt. Dann wird diese Emulsion heftig geschüttelt und abgekühlt, wobei beschichtete Mitteleingesetzt werden, welche innen mit einem hydrophoben Material beschichtet oder aus einem solchen hergestellt sind, um das Fett auszukristallisieren und einen Aufstrich aus einer Wasser-in-Oel Emulsion zu erhalten. Als Beispiel für das aus einer Oel-in-Wasser Emulsion bestehende Ausgangsmaterial wird Molkereirahm erwähnt. Zur Herstellung der Oel-in-Wasser Emulsion wird Magermilch auf 60°C erwärmt und neben anderen Zusätzen geschmolzene Butter zugegeben. Nach dem Pasteurisieren, Abkühlen und Rühren wird die abgekühlte Masse in einem mit Butterfett gefüllten Kristalliergefäss bei 18 - 20°C unter Anwendung von sehr hohen Scherkräften in eine Wasser-in-Oel Emulsion umgewandelt, es findet also eine Phasenumkehr statt.

Die bekannten Verfahren zur Herstellung von streichfähiger Butter mit reduziertem Fettgehalt verwenden entweder nur eine Butterfettfraktion oder es werden vorerst Rahmemulsionen des Tys Oel-in-Wasser hergestellt, die wenigstens teilweise in Wasser-in-Oel Emulsionen umgewandelt werden.

Die Erfinder haben sich die Aufgabe gestellt, ein Verfahren zur Herstellung von streichfähiger Butter mit reduziertem Fettgehalt der eingangs genannten Art zu schaffen, welche alle Komponenten von Vorzugs- oder Tafelbutter enthält und ohne Phasenumwandlung einfach und kostengünsig herzustellen ist. Weiter soll die erfindungsgemäss hergestellte Butter in bezug auf den Geschmack und das Aussehen unverändert bleiben, die essentiellen Fettsäuren der Vorzugs- oder Tafelbutter enthalten und auch ohne Konservierungsmittel während wenigstens 20 Tagen bei 5 - 8°C Lagertemperatur ohne geschmackliche Veränderung haltbar sein.

Die Aufgabe wird erfindungsgemäss dadurch gelöst, dass eine einem Butterfettgehalt bis 60 Gew.-%, bezogen auf das Endprodukt, entsprechende Menge Vorzugs- und/oder Tafelbutter auf eine Verarbeitungstemperatur 15 - 25°C gebracht, in einer dicht verschliessbaren Maschine durch mit hoher Scherkraft arbeitende Schneidmesser gestossen wird, während des anschliessenden Mischens und Knetens der feingeschnittenen Vorzugs- und/oder Tafelbuttermasse vorerst die erste wässrige Phase mit 2 - 8 Gew.-%, bezogen auf das Endprodukt, natürlichem Milchsäurekonzentrat, welches die wässrige Phase des Endprodukts auf einem pH von 5 - 6,5 puffert, dann die zweite wässrige Phase mit 4 - 10 Gew.-%, bezogen auf das Endprodukt, Alkali- und/oder Erdalkali-Gaseinat zugegeben werden, wobei die Komponenten durch das Kneten unter einem durch Reibungswärme bewirkten Temperaturanstieg von 3 - 5°C innig vermischt werden.

Für das Schneiden der Vorzugs- und/oder Tafelbutter werden in der Lebensmittelindustrie bekannte, horizontal oder vertikal arbeitende Maschinen eingesetzt, welche einen regelbaren Durchsatz durch Schneidmesser erlauben. Der Vorschub wird beispielsweise durch Förderwendel oder -schnecken erzeugt. Neben einem Schneid-, Misch- und Knetteil und den erwähnten Fördermitteln umfasst eine solche Maschine Einrichtungen zum Beschicken und Entleeren, Antriebsaggregate und Regelvorrichtungen. Beispielsweise können Fleischcutter zur Herstellung von Wurstbrät oder Schmelzkäse-Produktionsmaschinen eingesetzt werden.

Es hat sich als vorteilhaft erwiesen, im Schneid-, Misch- und Knetteil bei Unterdruck, vorzugsweise bei 0,2 - 0,9 bar, zu arbeiten. Dadurch kann im Vergleich zu einem bei Normaldruck stattfindenden Mischprozess eine Verbesserung der Konsistenz bzw. der Streichbarkeit der kalorienarmen Butter erreicht werden.

Vorzugsweise wird eine einem Butterfettgehalt von 30 - 50 Gew.-%, insbesondere 40 - 45 Gew.-%, entsprechende Menge von Vorzugs- und/oder Tafelbutter auf eine Temperatur von 18 - 22°C gebracht. Bei der industriellen Durchführung des erfindungsgemässen Verfahrens ist es von besonderem Vorteil, Vorzugs- und-/oder Tafelbutter direkt ab Butterfass oder Butterungsmaschine einzusetzen, und die Temperatur von 14 - 15°C auf die in der Maschine erforderliche Verarbeitungstemperatur zu bringen.

Die Temperatur darf zu Beginn des Schneid-, Misch- und Knetvorgangs nicht zu hoch sein, da durch die Messerenergie bei der Homogenisation der Butter und während des anschliessenden Mischens und Knetens ein durch Reibungswärme bewirkter Temperaturanstieg im erwähnten Ausmass von 3 - 5°C stattfindet. Die Endtemperatur soll vorzugsweise bei höchstens 28°C liegen.

Das Mischen und Kneten der feingeschnittenen Vorzugs- oder Tafelbutter mit der ersten und anschliessend der zweiten wässrigen Phase dauert in der Regel 2 - 8 Min. Diese Bearbeitungsdauer gilt sowohl bei der Zugabe auf einmal, als auch bei der stufenweisen oder kontinuierlichen Zugabe jeder der wässrigen Phasen.

Die erste wässrige Phase, das Milchsäurekonzentrat, enthält vorzugsweise 2 - 5 Gew.-% natürliche Milchsäure, etwa 85 - 90% Wasser und einen Rest von Molke- oder Magermilchbestandteilen, wie natürlichem Milchserum. Durch die Zugabe des Milchsäurekonzentrats wird der pH der wässrigen Phase des Endprodukts auf einem Wert von 5,3 - 6,2, insbesondere etwa 5,7 - 5,8, gepuffert. Die erste wässrige Phase kann in einem Schritt zugegeben werden.

Nach dem Homogenisieren und der Zugabe des als erste wässrige Phase bezeichneten natürlichen Milchsäurekonzentrats erfolgt die Einmischung der zweiten wässrigen Phase, dem Alkali- und/oder Erdalkali-Caseinat, welches vor dem Lösen zweckmässig sprühgetrocknet ist. Diese Phase enthält vorzugsweise 6 - 8 Gew.-% Alkali- und/oder Erdalkali-Caseinat. Die metallische Komponente besteht vorteilhaft aus Natrium, Kalium und-/oder Calcium.

Casein, der Haupteiweisskörper der Milch, ist ein hitzebeständiges Proteid, das aus mehreren sich nur um wenige Aminosäuren unterscheidende Fraktionen besteht. Casein wird aus Magermilch durch Säuren ab einem pH von etwa 5,2 und tiefer oder enzymatisch durch Lab ausgefällt. Bei einem pH von etwa 4,6 ist die Fällung fertig. Durch Behandlung der Casein-Suspension mit Alkali- oder Erdalkali-Lösung kann das Casein in lösliche oder dispergierbare Caseinate überführt werden.

Zur an sich bekannten Herstellung einer Caseinatlösung werden beispielsweise aus Magermilch gewonnenes Natrium-Caseinat und Zusatzwasser in einem separaten Mischtank zu einer etwa 17%-igen Losung aufbereitet. Die Lösung enthält etwa 16,5 Gew.-% Trockensubstanz und hat einen pH-Wert von etwa 6,6. Die Mischtemperatur liegt im Bereich von 50 - 70°C. Nach der Pasteurisierung wird die Lösung auf etwa 20°C abgekühlt und der Schneid-, Misch- und Knetmachine dosiert zugeführt. Die abgekühlte Caseinatlösung ist zähflüssig und hochviskos.

Das gelöste Alkali-Caseinat wird in wenigstens zwei Chargen oder kontinuierlich zu der bereits mit dem Milchsäurekonzentrat versetzten Knetmasse gegeben. Bei der Zugabe auf einmal kann beim Mischen und Kneten eine wenigstens teilweise Phasenumkehr erfolgen, es entsteht anstelle einer Butteremulsion (Wasser-in-Oel) eine flüssige Rahmemulsion (Oel-in-Wasser).

Der Wasseranteil des Endprodukts wird normalerweise ausschliesslich als wässrige Phase der Vorzugs- oder Tafelbutter, des Milchsäurekonzentrats und des Caseinats zugegeben.

Die erfindungsgemäss hergestellte Butter weist neben dem reduzierten Fettgehalt folgende wesentliche Vorteile auf:

– Da weder mit Butterfettfraktionen noch mit chemischen Behandlungsverfahren oder Phasenumwandlungen gearbeitet wird, bleiben alle wesentlichen Fettsäuren der Vorzugs- oder Tafelbutter unverändert im Lebensmittel enthalten.

– Trotz des hohen Wassergehalts treten beim Streichen der Butter keine Wassertröpfchen aus.

– Die geschmacklichen Merkmale der Vorzugs- oder Tafelbutter werden nicht verändert, weil keine Zusatzstoffe verwendet werden müssen.

– Das fertige Produkt weist den Glanz der Vorzugs- oder Tafelbutter auf.

– Die Anfälligkeit auf bakteriologisches Wachstum während einer Datierungsfrist von beispielsweise 21 Tagen bei 5 - 8°C Lagertemperatur ist auch ohne Konservierungsmittel gering.

– Durch Zugabe von höchstens 2 Gew.-% Natriumchlorid kann das erhaltene Produkt auch als gesalzene Butter verwendet werden.

Der Konsument kann dank der vorliegenden Erfindung eine Butter geniessen, welche alle physikalischen, geschmacklichen, hygienischen und ernährungsphysiologischen Eigenschaften der üblichen Vorzugs- oder Tafelbutter in sich vereinigt, aber wesentlich kalorienärmer ist.

## Patentansprüche

1. Verfahren zur Herstellung von streichfähiger Butter mit reduziertem Fettgehalt, aus Vorzugs- oder Tafelbutter, einer ersten wässrigen Phase mit einer leicht sauren Puffersubstanz und einer zweiten wässrigen Phase mit Milcheiweissen,

dadurch gekennzeichnet, dass

eine einem Butterfettgehalt bis 60 Gew.-%, bezogen auf das Endprodukt, entsprechende Menge Vorzugs- und-/oder Tafelbutter auf eine Verarbeitungstemperatur von 15 - 25°C gebracht, in einer dicht verschliessbaren Maschine durch mit hoher Scherkraft arbeitende Schneidmesser gestossen wird, während des anschliessenden Mischens und Knetens der feingeschnittenen Vorzugs- und/oder Tafelbuttermasse vorerst die erste wässrige Phase mit 2 - 8 Gew.-%, bezogen auf das Endprodukt, natürlichem Milchsäurekonzentrat, welches die wässrige Phase des Endprodukts auf einem pH von 5 - 6,5 puffert, dann die zweite wässrige Phase mit 4 - 10 Gew.-%, bezogen auf das Endprodukt, Alkali- und/oder Erdalkali-Gaseinat zugegeben werden, wobei die Komponenten durch das Kneten unter einem durch Reibungswärme bewirkten Temperaturanstieg von 3 - 5°C innig vermischt werden.

2. Verfahren nach Anspruch 1, dadurch gekennzeichnet, dass im Schneid-, Misch- und Knetteil der Maschine bei Unterdruck, vorzugsweise bei 0,2 - 0,9 bar, gearbeitet wird.

3. Verfahren nach Anspruch 1 oder 2, dadurch gekennzeichnet, dass eine einem Butterfettgehalt von 30 - 50 Gew.-%, vorzugsweise 40 - 45 Gew.-%, entsprechende Menge von Vorzugs- und/oder Tafelbutter auf eine Verarbeitungstemperatur von 18 - 22°C gebracht und der Schneid-, Misch- und Knetmaschine zugeführt wird.

4. Verfahren nach einem der Ansprüche 1 - 3, dadurch gekennzeichnet, dass die Vorzugs- und/oder Tafelbutter ab Butterfass oder Butterungsmaschine, insbesondere mit einer Temperatur von 14 - 15°C, auf die Verarbeitungstemperatur erwärmt und der Schneid-, Misch- und Knetmaschine zugeführt wird.

5. Verfahren nach einem der Ansprüche 1 - 4, dadurch gekennzeichnet, dass das Mischen und Kneten der feingeschnittenen Vorzugs- und/oder Tafel butter mit der ersten und zweiten wässrigen Phase insgesamt 2 - 8 Min. dauert.

6. Verfahren nach einem der Ansprüche 1 - 5, dadurch gekennzeichnet, dass die erste wässrige Phase mit 3 - 6 Gew.-% Milchsäurekonzentrat, die zweite wässrige Phase vorzugsweise mit 6 - 8 Gew.-% Alkali - oder Erdalkali-Caseinat zugegeben werden.

7. Verfahren nach einem der Ansprüche 1 - 6, dadurch gekennzeichnet, dass die zweite wässrige Phase mit Natrium-, Kalium- und/oder Calcium-Caseinat zugegeben wird.

8. Verfahren nach Anspruch 7, dadurch gekennzeichnet, dass die zweite wässrige Phase als etwa 17%-ige Natrium-Caseinatlösung zugegeben wird.

9. Verfahren nach einem der Ansprüche 1 - 8, dadurch gekennzeichnet, dass die erste wässrige Phase auf einmal, die zweite wässrige Phase chargenweise in wenigstens zwei Stufen oder kontinuierlich zugegeben werden.

10. Verfahren nach einem der Ansprüche 1 - 9, dadurch gekennzeichnet, dass das mit der ersten wässrigen Phase zugegebene Milchsäurekonzentrat die wässrige Phase des Endprodukts auf einem pH im Bereich von 5,3 - 6,2, vorzugsweise etwa 5,7 - 5,8, puffert.

## Claims

1. A process for producing spreadable butter with a reduced fat content from choice grade or table butter, a first aqueous phase with a slightly acid buffer substance and a second aqueous phase with milk proteins , characterised in that
a quantity of choice grade and/or table butter corresponding to a butter fat content of up to 60% by weight, based on the end product, is brought to a processing temperature of 15 to 25°C, is beaten,in a tightly sealable machine by cutting blades operating with a high shearing force and, during the subsequent mixing and kneading of the finely cut choice grade and/or table butter mass the first aqueous phase with 2 to 8% by weight, based on the end product, of natural lactic acid concentrate which buffers the aqueous phase of the end product to a pH of 5 to 6.5 is firstly added, then the second aqueous phase with 4 to 10% by weight, based on the end product, of alkali and/or alkaline earth caseinate is added, the components being mixed thoroughly by the kneading operation with a rise in temperature of 3 to 5°C brought about by frictional heat.

2. A process according to claim 1, characterised in that it is carried out under vacuum, preferably at 0.2 to 0.9 bar, in the cutting, mixing and kneading part of the machine.

3. A process according to claim 1 or 2, characterised in that a quantity of choice grade and/or table butter corresponding to a butter fat content of 30 to 50% by weight, preferably 40 to 45% by weight, is brought to a processing temperature of 18 to 22°C and is supplied to the cutting, mixing and kneading machine.

4. A process according to one of claims 1 to 3, characterised in that the choice grade and/or table butter from the butter churn or continuous butter making machine, in particular at a temperature of 14 to 15°C, is heated to the processing temperature and is supplied to the cutting, mixing and kneading machine.

5. A process according to one of claims 1 to 4, characterised in that the mixing and kneading of the finely cut choice grade and/or table butter with the first and second aqueous phase lasts a total of 2 to 8 minutes.

6. A process according to one of claims 1 to 5, characterised in that the first aqueous phase with 3 to 6% by weight of lactic acid concentrate and the second aqueous phase preferably with 6 to 8% by weight of alkali or alkaline earth caseinate are added.

7. A process according to one of claims 1 to 6, characterised in that the second aqueous phase with sodium, potassium and/or calcium caseinate is added.

8. A process according to claim 7, characterised in that the second aqueous phase is added as a substantially 17% sodium caseinate solution.

9. A process according to one of claims 1 to 8, characterised in that the first aqueous phase is added in one batch, and the second aqueous phase is added batch-wise in at least two stages or continuously.

10. A process according to one of claims 1 to 9, characterised in that the lactic acid concentrate added with the first aqueous phase buffers the aqueous phase of the end product to a pH in the range of 5.3 to 6.2, preferably about 5.7 to 5.8.

## Revendications

1. Procédé de préparation de beurre à étaler pauvre en graisse à partir de beurre extra ou de beurre de table, d'une première phase aqueuse à substance-tampon légèrement acide et une seconde phase aqueuse à albumines de lait, caractérisé en ce qu'une quantité de beurre extra et/ou de beurre de table correspondant à un teneur en butyrine de jusqu'à 60% en poids, sur base du produit final, est portée à une température de transformation de 15 à 25°C dans une machine pouvant être obturée hermétiquement, qu'elle est battue par des lames travaillant avec une force de cisaillement élevée, que pendant le mélangeage et le malaxage ultérieurs, il est ajouté à la masse de beurre extra et/ou de beurre de table finement hachée tout d'abord la première phase aqueuse avec de 2 à 8% en poids, sur base du produit final, de concentré d'acide lactique naturel qui régule la phase aqueuse du produit final à un pH de 5 à 6,5, puis la seconde phase aqueuse avec de 4 à 10%, sur base du produit final, de caséinate alcalin et/ou alcalino-terreux, les composants étant intimement mélangés par le malaxage, avec une augmentation de température de 3 à 5°C provoquée par la chaleur de friction.

2. Procédé suivant la revendication 1, caractérisé en ce que, dans la partie de hachage, mélangeage et malaxage de la machine, on travaille avec une dépression, de préférence de 0,2 à 0,9 bar.

3. Procédé suivant la revendication 1 ou 2, caractérisé en ce qu'une quantité de beurre extra et/ou de beurre de table correspondant à une teneur en butyrine de 30 à 50% en poids, de préférence de 40 à 45% en poids, est amenée à une température de préparation de 18 à 22°C et alimentée dans la machine de hachage, mélangeage et malaxage.

4. Procédé suivant l'une des revendications 1 à 3, caractérisé en ce que le beurre extra et/ou le beurre de table du fût à beurre ou de la baratte, en particulier à une température de 14 à 15°C, est chauffé à la température de traitement et alimenté dans la machine de hachage, mélangeage et malaxage.

5. Procédé suivant l'une des revendications 1 à 4, caractérisé en ce que le mélangeage et le malaxage du beurre extra et/ou du beurre de table finement haché avec la première et la seconde phase aqueuse dure, en tout, de 2 à 8 minutes.

6. Procédé suivant l'une des revendications 1 à 5, caractérisé en ce que la première phase aqueuse est ajoutée avec de 3 à 6% en poids de concentré d'acide lactique, la seconde phase aqueuse, de préférence, avec de 6 à 8% en poids de caséinate alcalin ou alcalino-terreux.

7. Procédé suivant l'une des revendications 1 à 6, caractérisé en ce que la seconde phase aqueuse est ajoutée avec du caséinate de sodium de potassium et/ou de calcium.

8. Procédé suivant la revendication 7, caractérisé en ce que la seconde phase aqueuse est ajoutée sous forme d'une solution de caséinate de sodium à environ 17%.

9. Procédé suivant l'une des revendications 1 à 8, caractérisé en ce que la première phase aqueuse est ajoutée en une seule fois, la seconde phase aqueuse par charges en au moins deux étapes ou en continu.

10. Procédé suivant l'une des revendications 1 à 4, caractérisé en ce que le concentré d'acide lactique ajouté avec la première phase aqueuse règle la phase aqueuse du produit final à un pH de l'ordre de 5,3 à 6,2, de préférence d'environ 5,7 à 5,8.